# EUROPÄISCHE PATENTANMELDUNG

(11) **EP 1 061 299 A2**
(43) Veröffentlichungstag der Anmeldung: **20.12.2000**
(21) Anmeldenummer: 00112277.9
(22) Anmeldetag: 08.06.2000
(51) Int. Cl.: F16K 11/044

(54) **Umschaltventil**

(30) Priorität: 16.06.1999 DE 19927377
(71) Anmelder: Friedrich Grohe AG & Co. KG, 58675 Hemer (DE)
(72) Erfinder: Hannemann, Fred, 04916 Herzberg (DE); Weiss, Roland, 58640 Iserlohn (DE)

(57) **Zusammenfassung**

Bei einem Umschaltventil (3) für Sanitärarmaturen zur wahlweisen Zuführung von Wasser zu einem ersten oder einem zweiten Auslauf, bei dem ein mit einer Betätigungsspindel (34) in Verbindung stehendes, zwischen zwei Ventilsitzen (31,32) bewegbares Ventilverschlussglied (30) vorgesehen ist, wobei wenigstens ein Ventilsitz (31,32) an einem in eine Bohrung im Armaturenkörper (1) einsetzbaren Kopfstück (33) ausgebildet ist, in dem die Betätigungsspindel (34) gedichtet gelagert und verschiebbar herausgeführt ist, ist zur Verbesserung vorgeschlagen, dass das Kopfstück (33) in der Bohrung (14) versenkt eingeschoben und von einer separaten, eine Durchgangsbohrung (351) für die Betätigungsspindel (34) aufweisenden Abdeckscheibe (35) in der Stecklage gehalten ist, wobei die Abdeckscheibe (35) im äusseren Endbereich der Bohrung (14) fixierbar ist.

## Beschreibung

Die Erfindung bezieht sich auf ein Umschaltventil für Sanitärarmaturen zur wahlweisen Zuführung von Wasser zu einem ersten oder einem zweiten Auslauf, bei dem ein mit einer Betätigungsspindel in Verbindung stehendes, zwischen zwei Ventilsitzen bewegbares Ventilverschlussglied vorgesehen ist, wobei wenigstens ein Ventilsitz an einem in eine Bohrung im Armaturenkörper einsetzbaren Kopfstück ausgebildet ist, in dem die Betätigungsspindel gedichtet gelagert und verschiebbar herausgeführt ist.

Ein Umschaltventil dieser Gattung ist aus der Druckschrift DE 43 23 496 A1 bekannt. Bei diesem Umschaltventil ist das Kopfstück sichtbar am Armaturenkörper angeordnet.

Der Erfindung liegt die Aufgabe zugrunde, ein verbessertes Umschaltventil vorzuschlagen, wobei insbesondere eine geschmacklich und hygienisch ansprechende Anpassung an die Einbaugegebenheiten in Sanitärarmaturen mit einfachen Mitteln ermöglicht werden soll.

Diese Aufgabe wird erfindungsgemäss dadurch gelöst, dass das Kopfstück in der Bohrung versenkt eingeschoben und von einer separaten, eine Durchgangsbohrung für die Betätigungsspindel aufweisenden Abdeckscheibe in der Stecklage gehalten ist, wobei die Abdeckscheibe im äusseren Endbereich in der Bohrung fixierbar ist. Weitere Ausgestaltungen der Erfindung sind in den Ansprüchen 2 bis 11 angegeben.

Mit den vorgeschlagenen Massnahmen wird insbesondere erreicht, dass mit einfachen Mitteln eine gestalterische Anpassung der Aussenkontur der Abdeckscheibe an die Aussenkontur des Armaturenkörpers erzielbar ist. Mit den erfindungsgemässen Massnahmen wird es ausserdem ermöglicht, wichtige Funktionsteile, wie beispielsweise Kopfstück und Stellspindel, aus optimalen Werkstoffen herzustellen, die optisch nicht zur Oberfläche des Armaturenkörpers, der Abdeckscheibe oder zu anderen sichtbaren Teilen passen müssen.

Ein Ausführungsbeispiel der Erfindung ist in der Zeichnung dargestellt und wird im folgenden näher beschrieben. Es zeigt
- Fig. 1: eine sanitäre Aufputzwassermischbatterie im Längsschnitt mit einem Umschaltventil;
- Fig. 2: einen Teil der in Fig. 1 gezeigten Wassermischbatterie mit dem Umschaltventil in vergrösserter Darstellung.

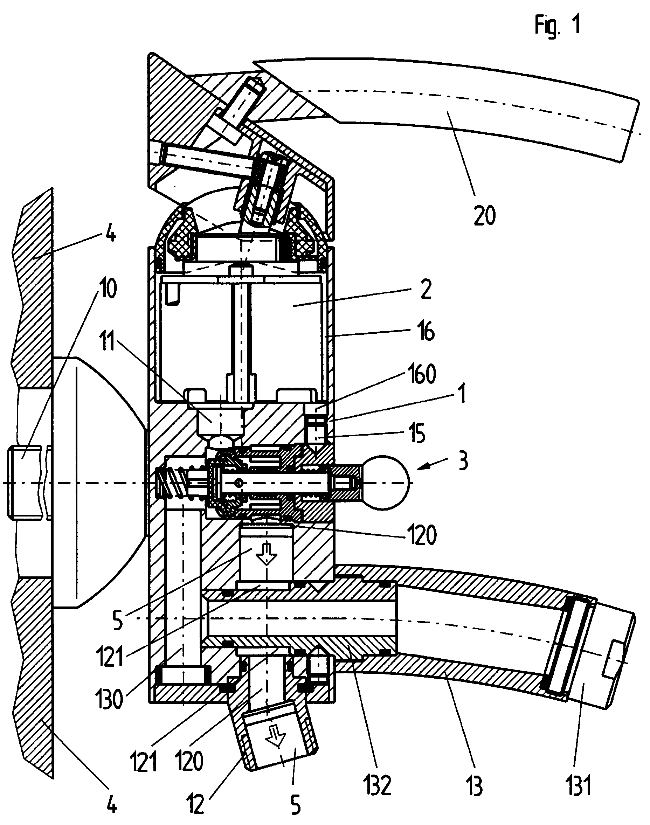

Die in der Zeichnung dargestellte Mischbatterie wird wesentlich von einem Batteriekörper 1 gebildet, bei dem ein vertikal an einer Gebäudewand 4 angeordneter Mittelteil vorgesehen ist. An den Mittelteil sind zu beiden Seiten waagerechte Arme angeformt, an denen jeweils ein Anschlussstutzen 10 für das Kaltwasserversorgungsleitungsnetz und das Warmwasserversorgungsleitungsnetz vorgesehen ist. Im Mittelteil des Armaturenkörpers 1 ist, wie es aus Fig. 1 zu entnehmen ist, im oberen Bereich eine Mischventilkartusche 2 angeordnet, die mit jeweils einem Kanal (in der Zeichnung nicht dargestellt) mit dem Anschlussstutzen 10 für das zufliessende Warmwasser und dem Anschlussstutzen 10 für das zufliessende Kaltwasser verbunden ist. Die Mischventilkartusche 2 ist am oberen Bereich des Armaturenkörpers 1 mit einem Betätigungsgriff 20 herausgeführt. Das in der Mischventilkartusche 2 erzeugte Mischwasser wird in einen Mischwasserkanal 11 im Armaturenkörper 1 abgegeben. Durch eine Drehbewegung des Betätigungsgriffs 20 um die Mittelachse der Mischventilkartusche 2 kann das Mischungsverhältnis des zufliessenden Kalt- und Warmwassers bzw. die Mischwassertemperatur eingestellt werden. Durch eine Auf- oder Abbewegung des Betätigungsgriffs 20 um eine senkrecht zur Mittelachse der Mischventilkartusche 2 angeordneten Achse kann die Gesamtwasserdurchflussmenge durch die Mischventilkartusche 2 eingestellt werden.

Der Mischwasserkanal 11 mündet radial in eine als Sackbohrung ausgebildete Radialbohrung 14. In der Radialbohrung 14 ist ein als Baueinheit ausgebildetes Umschaltventil 3 angeordnet, von dem das vom Mischwasserkanal 11 zufliessende Wasser wahlweise in einen Verbindungskanal 130 zu einem Auslaufrohr 13 oder in einen Verbindungskanal 120 zu einem Anschluss 12 für eine Brause geleitet werden kann. Das Auslaufrohr 13 ist am Armaturenkörper 1 gedichtet befestigt und weist am vorstehenden Endbereich ein Auslaufmundstück 131 auf, an dem das zuströmende Wasser als Freistrahl austreten kann.
Der Verbindungskanal 120 zum Anschluss für eine in der Zeichnung nicht dargestellte Schlauchbrause ist mit einem Ringbereich 121 im Armaturenkörper 1 um ein Verbindungsrohr 132 des Auslaufrohrs 13 herumgeführt. In dem Verbindungskanal 120 ist stromaufwärts vor dem Ringbereich 121 ein Rückflussverhinderer 5 angeordnet. Darüber hinaus ist stromabwärts im Anschluss 12 ein weiterer Rückflussverhinderer 5 angeordnet, so dass bei einem Anschluss einer Schlauchbrause und einem Druckausfall im Versorgungsleitungsnetz ein unerwünschtes Rücksaugen von Schmutzwasser verhindert wird.

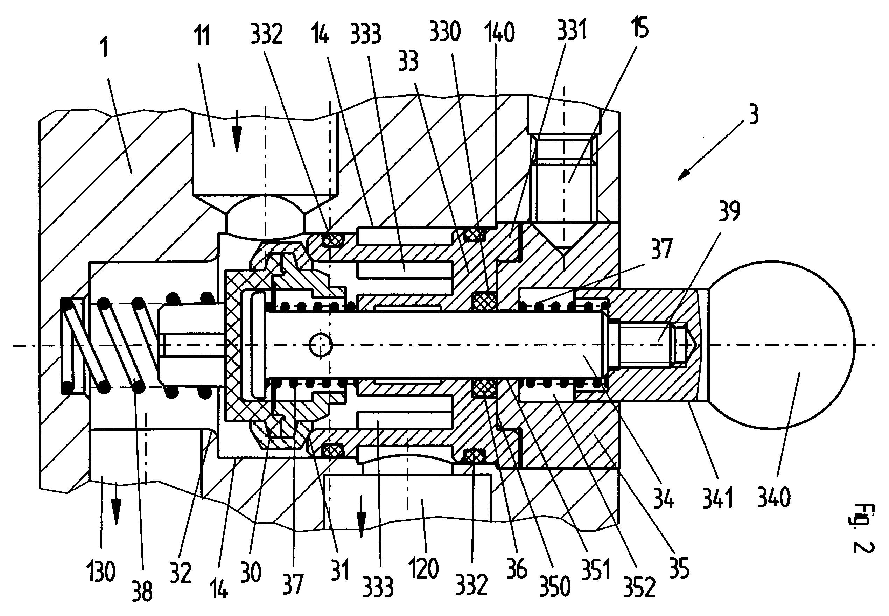

Wie es insbesondere aus Fig. 2 der Zeichnung ersichtlich ist, wird das in der Radialbohrung 14 angeordnete Umschaltventil 3 im wesentlichen von einem Verschlussglied 30, das begrenzt beweglich an einer Betätigungsspindel 34 befestigt ist, sowie einem Kopfstück 33 und einer Abdeckscheibe 35 gebildet. Das Verschlussglied 30 wirkt hierbei einerseits mit einem an der Stirnseite des Kopfstücks 33 ausgebildeten Ventilsitz 31 und andererseits mit einem axial versetzt als Ringschulter in der Bohrung 14 ausgebildeten Ventilsitz 32 zusammen. Das Kopfstück 33 ist mit einem Ringbund 331 an einer Schulter 140 in der Radialbohrung 14 in der Stecklage versenkt angelagert, wobei in dieser Steckposition das Kopfstück 33 von der mit einer Stiftschraube 15 gehaltenen Abdeckscheibe 35 gesichert wird.
Das Verschlussglied 30 wird von einer Stellfeder 38 in eine bevorzugte Schliessposition gedrückt, wie es insbesondere aus Fig. 2 zu entnehmen ist. In dieser Position wird der Wasserauslauf zum Auslaufrohr 13 freigegeben. In dem Verschlussglied 30 ist eine Betätigungsspindel 34 hineingeführt und wird hierin begrenzt verschieblich gehalten, wobei das Verschlussglied 30 so dimensioniert ist, dass es, wenn die Betätigungsspindel 34 sich in einer neutralen Axialposition befindet, sowohl an dem Ventilsitz 31 als auch an dem Ventilsitz 32 zur Absperrung gelangen kann. Das Verschlussglied 30 ist so bemessen, dass es sowohl den Ventilsitz 31 als auch den Ventilsitz 32 verschliessen kann, ohne dass dabei die Betätigungsspindel 34 aus ihrer neutralen Axialposition bzw. ihrer Ruhestellung bewegt werden muss. Zur Rückführung der Betätigungsspindel 34 in die neutrale Axialposition sind zu beiden Seiten des Kopfstücks 33 Rückstellfedern 37 angeordnet, die sich andererseits jeweils im Bereich der Betätigungsspindel 34 abstützen.

Koaxial zu einer Durchgangsbohrung 351 zur Hindurchführung der Betätigungsspindel 34 durch die Abdeckscheibe 35 ist von der Aussenseite her eine Einsenkung 352 ausgebildet. In dieser Einsenkung 352 ist ein zylindrischer Ansatz 341 eines ausserhalb des Armaturenkörpers 1 angeordneten Griffs 340 eingeführt und mittels Gewinde 39 mit der Betätigungsspindel 34 verbunden. Der Ansatz 341 ist dabei so ausgebildet, dass die äussere Rückstellfeder 37 sich in einer ringförmigen Ausnehmung abstützt, während sie andererseits im Grund der Aussenkung 352 der Abdeckscheibe 35 aufgenommen ist. Zur Abdichtung in der als Sackbohrung ausgebildeten Radialbohrung 14 trägt das Kopfstück 33 im Mantelbereich zu beiden Seiten des Verbindungskanals 120 jeweils einen Dichtring 332, wobei in der Wandung Durchbrüche 333 ausgebildet sind, durch die das Wasser vom Ventilsitz 31 in den Verbindungskanal 120 strömen kann. Das Kopfstück 33 trägt ausserdem stirnseitig in einer Einsenkung 330 einen Dichtring 36. Die Aussenseite der Einsenkung 330 wird in der Stecklage von einer Stirnseite 350 der Abdeckscheibe 35 verschlossen. Der Dichtring 36 ist dabei so dimensioniert, dass das Kopfstück 33 mit dem Ringbund 331 in der Stecklage von der Stirnseite 350 der Abdeckscheibe 35 spielfrei gegen die Schulter 140 gedrückt wird.

Wenn es vom Benutzer gewünscht wird, dass der Wasserauslauf vom Auslaufrohr 13 auf den Anschluss 12 für die Brauseleitung umgeleitet werden soll, so ist der Griff 340 axial in den Armaturenkörper 1 entgegen der Kraft der Stellfeder 38 und der Rückstellfeder 37 einzuschieben, bis das Verschlussglied 30 am Ventilsitz 32 anliegt. Nach dem Loslassen des Griffs 340 wird die Betätigungsspindel 34 von den Rückstellfedern 37 wieder in eine neutrale Mittelposition zurückgeführt, während das Verschlussglied 30 durch den Staudruck des über die Brause austretenden Wassers entgegen der Kraft der Rückstellfeder 38 auf dem Ventilsitz 32 gehalten ist. Soll hiernach ein erneutes Rückschalten des Wasserausflusses auf das Auslaufrohr 13 erfolgen, so kann dies durch ein Herausziehen des Griffs 340 aus dem Armaturenkörper 1 erfolgen, wonach das Verschlussglied 30 wieder die in Fig. 2 gezeigte Position einnimmt. Wird dagegen in einer Umschaltventilstellung, in der das Wasser der Brause zugeführt wird, der Wasserzufluss mit der Mischventilkartusche 2 abgesperrt, so sinkt der Staudruck der Brauseleitung, so dass nunmehr die Stellfeder 38 das Verschlussglied 30 in seine bevorzugte Absperrstellung zurückführt und damit den bevorzugten Ausfluss durch das Auslaufrohr 13 freigibt.

Das Umschaltventil 3 ist hierbei als Baueinheit ausgebildet, wobei das korbartig ausgebildete Kopfstück 33 einerseits vom Verschlussglied 30 und andererseits über die Betätigungsspindel 34 mit dem Griff 40 von der Abdeckscheibe 35 gehalten ist. Die gesamte Baueinheit kann zusammen mit der Stellfeder 38 in die Radialbohrung 14 eingeschoben werden. Zur Fixierung in der Stecklage wird die Stiftschraube 15 vom Aufnahmeraum 16 für die Mischventilkartusche 2 in eine Bohrung 160 eingeschraubt. Sodann ist das Umstellventil betriebsbereit.

Die äussere Stirnfläche der Abdeckscheibe 35 kann hierbei entsprechend der Aussenkontur des Armaturenkörpers 1 ausgebildet sein. Darüber hinaus kann die äussere Stirnfläche der Abdeckscheibe 35 mit einer Beschichtung versehen sein oder auch die gesamte Abdeckscheibe 35 aus korrosionsfestem Stahl hergestellt sein.

## Patentansprüche

1. Umschaltventil (3) für Sanitärarmaturen zur wahlweisen Zuführung von Wasser zu einem ersten oder einem zweiten Auslauf, bei dem ein mit einer Betätigungsspindel (34) in Verbindung stehendes, zwischen zwei Ventilsitzen (31,32) bewegbares Ventilverschlussglied (30) vorgesehen ist, wobei wenigstens ein Ventilsitz (31,32) an einem in eine Bohrung im Armaturenkörper (1) einsetzbaren Kopfstück (33) ausgebildet ist, in dem die Betätigungsspindel (34) gedichtet gelagert und verschiebbar herausgeführt ist, dadurch gekennzeichnet, dass das Kopfstück (33) in der Bohrung (14) versenkt eingeschoben und von einer separaten, eine Durchgangsbohrung (351) für die Betätigungsspindel (34) aufweisenden Abdeckscheibe (35) in der Stecklage gehalten ist, wobei die Abdeckscheibe (35) im äusseren Endbereich der Bohrung (14) fixierbar ist.

2. Umschaltventil nach Anspruch 1, dadurch gekennzeichnet, dass die Abdeckscheibe (35) von einer radialen Stiftschraube (15) im Armaturenkörper (1) in ihrer Axialposition gesichert ist.

3. Umschaltventil nach Anspruch 1 oder 2, dadurch gekennzeichnet, dass zur Abdichtung der Betätigungsspindel (34) im Kopfstück (33) ein Dichtring (36) in einer Einsenkung (330) angeordnet ist, deren Aussenseite von einer Stirnseite (350) der Abdeckscheibe (35) verschlossen wird.

4. Umschaltventil nach wenigstens einem der Ansprüche 1 bis 3, dadurch gekennzeichnet, dass das Kopfstück (33) in der Stecklage im Armaturenkörper (1) mit einem Ringbund (331) an einer Schulter (140) in der Bohrung (14) axial anliegt.

5. Umschaltventil nach wenigstens einem der Ansprüche 1 bis 4, dadurch gekennzeichnet, dass von der Aussenseite der Abdeckscheibe (35) konzentrisch zur Durchgangsbohrung (351) eine Einsenkung (352) ausgebildet ist, in der ein an der Betätigungsspindel (34) befestigbarer Griff (340) mit einem zylindrischen Ansatz (341) und eine Rückstellfeder (37) angeordnet sind.

6. Umschaltventil nach wenigstens einem der Ansprüche 1 bis 5, dadurch gekennzeichnet, dass der elastische Dichtring (36) so dimensioniert und angeordnet ist, dass er neben der Abdichtung ein axiales Spiel zwischen dem Kopfstück (33) und der Abdeckscheibe (35) in der Bohrung (14) kompensiert.

7. Umschaltventil nach wenigstens einem der Ansprüche 1 bis 6, dadurch gekennzeichnet, dass das Kopfstück (33) aus Kunststoff im Spritzgiessverfahren hergestellt ist.

8. Umschaltventil nach wenigstens einem der Ansprüche 1 bis 7, dadurch gekennzeichnet, dass die äussere Stirnfläche der Abdeckplatte (35) der äusseren Form des Armaturenkörpers (1) entspricht.

9. Umschaltventil nach wenigstens einem der Ansprüche 1 bis 8, dadurch gekennzeichnet, dass wenigstens die äussere Stirnfläche der Abdeckscheibe (35) eine Beschichtung aufweist.

10. Umschaltventil nach wenigstens einem der Ansprüche 1 bis 8, dadurch gekennzeichnet, dass die Abdeckscheibe (35) aus korrosionsfestem Stahl hergestellt ist.

11. Umschaltventil nach wenigstens einem der Ansprüche 1 bis 10, dadurch gekennzeichnet, dass die Abdeckscheibe (35) mit dem Ventil als Baueinheit ausgebildet ist.
